# EUROPEAN PATENT APPLICATION

(11) **EP 0 911 609 A1**
(43) Date of publication of application: **28.04.1999**
(21) Application number: 98203558.6
(22) Date of filing: 23.10.1998
(51) Int. Cl.: G01D 5/20, G01D 5/22, F16K 37/00

(54) **Device for measuring the displacement of stems of valves**

(30) Priority: 24.10.1997 IT MI972406
(71) Applicant: ABB Kent Taylor S.p.a., 22016 Lenno (CO) (IT)
(72) Inventor: Volonterio, Eugenio, 22070 Appiano Gentile(Co) (IT); Borelli, Riccardo, 22016 Lenno(Co) (IT)
(74) Representative: Giavarini, Francesco

(57) **Abstract**

A device for transmitting an angular position, particularly for stems of adjustment valves characterized in that it comprises a spindle (2) which is meant to be coupled to a stem of an adjustment valve and is provided with two inductive pickups, which are adapted to generate a relative measure of the rotation angle of the spindle (2) by means of a differential system, following a movement of the stem of said valve, and electronic excitation and detection means which are adapted to convert said measure into a pair of electrical signals, whose duration difference constitutes the measure of the movement of the stem of said adjustment valve.

## Description

The present invention relates to a device for the relative measurement of angles, particularly for stems of adjustment valves and rotary valves.

More particularly, the invention relates to an electronic position transmission device adapted to transmit, according to a linear criterion, the position of the stem of adjustment valves or the position of rotary valves.

As is known, in the field of adjustment valves it is particularly important to know at all times the position of the stem of the valve in order to know the state of the valve at all times.

Position transducers currently used for this purpose suffer the drawback that they do not offer high measurement precision and are further affected by mechanical displacements caused not by the angular movement of the stem of the valve whose position is to be detected but, for example, by thermal expansions.

It is commonly known to use a rotating potentiometer as a position transducer, which, however, entails the drawback that it has components which are subject to friction wear and also requires shielding for protection against the inevitable sparks generated during its operation.

Another type of position transducer that is currently used is a differential transformer, which however entails the drawback of being expensive.

The main aim of the present invention is to provide a device for the relative measurement of angles, particularly for stems of adjustment valves and rotary valves, which provides a highly precise measurement.

Within the scope of this aim, an object of the present invention is to provide a device for the relative measurement of angles, particularly for stems of adjustment valves and rotary valves, whose obtainable measurement allows to minimize the effects of mechanical displacements not caused by angular movement, such as for example thermal expansions.

Another object of the present invention is to provide a device for the relative measurement of angles particularly for stems of adjustment valves and rotary valves, which allows to obtain a linear measurement signal.

Another object of the present invention is to provide a device for the relative measurement of angles, particularly for stems of adjustment valves and rotary valves, having a modest power consumption.

Another object of the present invention is to provide a device for the relative measurement of angles, particularly for stems of adjustment valves and rotary valves, which is highly reliable, relatively easy to manufacture and at low costs.

This aim, these objects and others which will become apparent hereinafter are achieved by a device for the relative measurement of angles, particularly for stems of adjustment valves and rotary valves, characterized in that it comprises a spindle which is meant to be coupled to a stem of an adjustment valve and is provided with two inductive pickups, which are adapted to generate a relative measure of the rotation angle of said spindle by means of a differential system, following a movement of the stem of said valve, and electronic excitation and detection means which are adapted to convert said measure into a pair of electrical signals, the duration difference whereof constitutes the measure of the movement of the stem of said adjustment valve.

The above mentioned aim, as well as the objects mentioned above and others as well, are also achieved by a method for detecting an angular position, particularly for determining the position of the stem of an adjustment valve and of a rotary valve, characterized in that it comprises the steps of:
converting into a rotation a movement of an element the position whereof is to be determined;
detecting said rotation by means of a double inductive transducer which is adapted to generate a relative measure of said rotation by means of a differential system;
converting said measure into two signals the duration whereof is proportional to said detected rotation; and
generating a difference between said two signals in order to obtain the intended position measurement.

Further characteristics and advantages of the present invention will become apparent from the following detailed description of preferred but not exclusive embodiments of the device according to the invention, illustrated only by way of non-limitative example in the accompanying drawings, wherein:

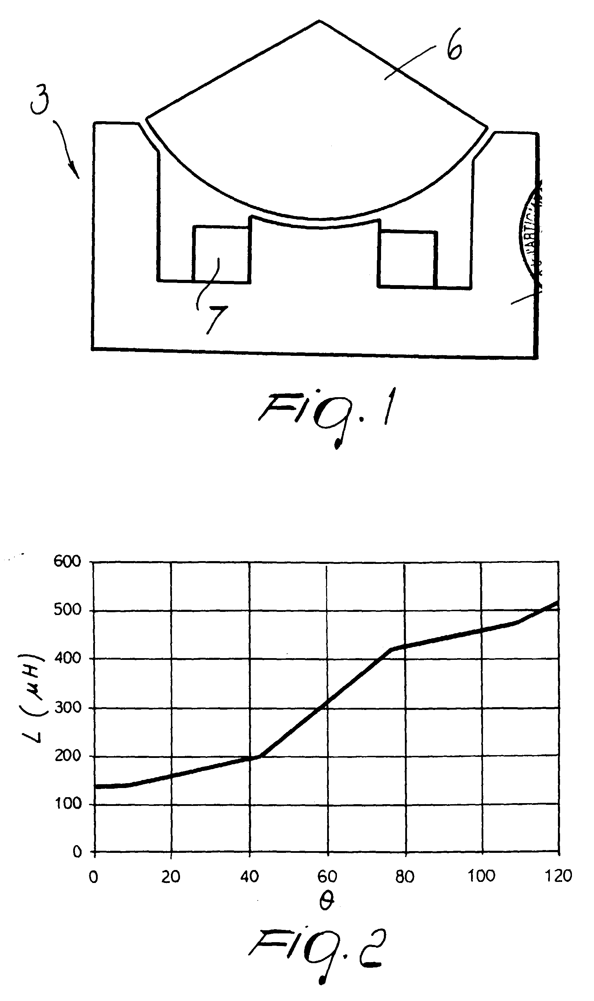

Figure 1 is a schematic plan view of the pickup of the device according to the invention;
Figure 2 is a graph illustrating the variations of the signal as a function of the angle with the pickup executed according to a first embodiment of the present invention;
Figure 3 is a graph illustrating the variations of the signal as a function of the angle with the pickup executed according to a second embodiment of the present invention;
Figure 4 is a block diagram of the electronic excitation and detection circuit of the device according to the present invention;
Figure 5 is a sectional elevation view of the arrangement of a pair of ferrite sectors which belong to the pickup on a spindle which is meant to be coupled to the stein of an adjustment valve;
Figure 6 is a plan view of a first embodiment of the ferrite sector of the pickup according to the present invention;
Figure 7 is a partially cutout plan view of the measurement device according to the invention;
Figure 8 is a sectional side elevation view of the measurement device according to the present invention;
Figure 9 is a sectional side view of the measurement device according to the present invention;
Figure 10 is a perspective view of a second embodiment of the ferrite sector of the pickup used in the device according to the present invention;
Figure 11 is a side elevation view of a second embodiment of the fixing of the ferrite sectors to the spindle, illustrating ferrite sectors according to a third embodiment;
Figure 12 is a plan view of a third embodiment of the ferrite sectors (disks), shown installed in Figure 11;
Figure 13 is a plan view of a fourth embodiment of the ferrite sectors (disks), shown installed in Figure 11; and
Figure 14 is a sectional view, taken along the plane XIV-XIV, of the ferrite disk shown in Figure 13.

With reference to the above figures, the device according to the invention, generally designated by the reference numeral 1, comprises a spindle 2 which is meant to be coupled to a stem of an adjustment valve (not shown) or to a rotary valve and whereon two inductive pickups, generally designated by the reference numeral 3, are arranged.

Each inductive pickup 3 is constituted by a ferrite core 4, which is rigidly coupled to the structure of the sensor, i.e.. to a casing 5 which is preferably made of aluminum and constituted by two halves that enclose the sensor, and by a movable part 6 made of ferrite and rigidly coupled to the spindle 2 that transmits the movement of the stem of the valve.

A copper winding 7 is provided on the fixed part 4 and constitutes the excitation coil.

The fixed part 4 has a transverse cross-section which is preferably E-shaped or U-shaped, with copper windings 7 provided around the shorter central wing.

The fixed part 4 and the movable part 6 constitute a variable inductor for each pair constituted by a fixed part 4 and a movable part 6.

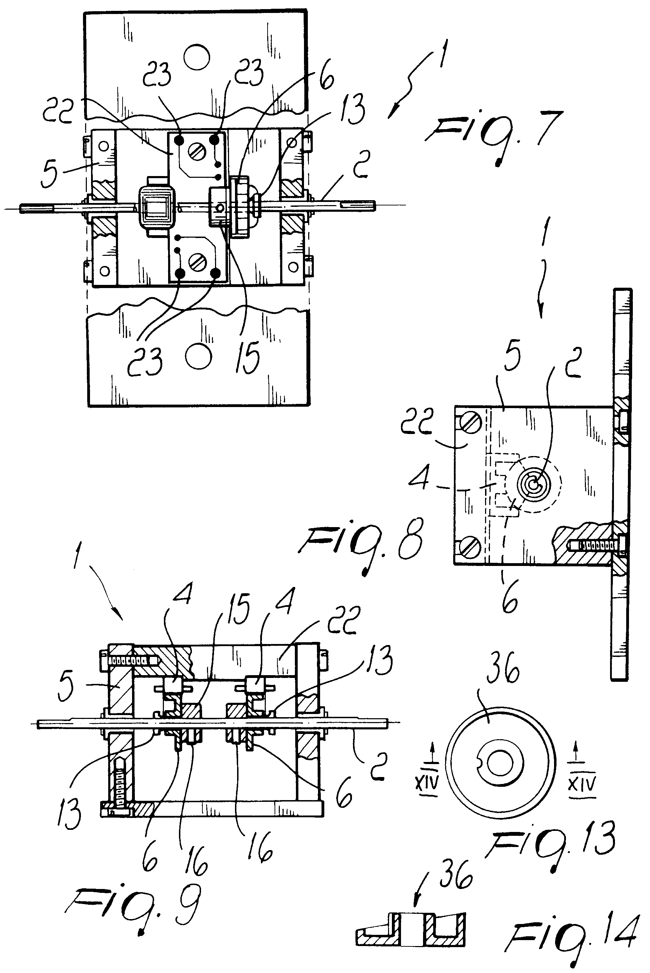

The movable part, constituted by a ferrite disk 6, is provided as shown in Figure 6. Such disk has a central hole 8 which is surrounded by a sleeve 9 to allow the spindle 2 to pass through it.

The disk 6 also has two diametrically opposite recesses 10 and 11 and a raised rim which is arranged circumferentially around a portion of the disk 6.

Advantageously, the disk 6 is rigidly coupled to the spindle 2 by means of a wedge-shaped plug 13 which is fitted on the spindle 2 and glued against the sleeve 9 of the disk 6, as regards upward locking, and a disk-like element 15 provided with a locking grub screw 16 for downward locking. In this manner, the disk 6 is kept rigidly coupled to the spindle by the plug 13 and by the disk-like element 15.

The spindle 2 is fitted in an opening formed in the casing 5.

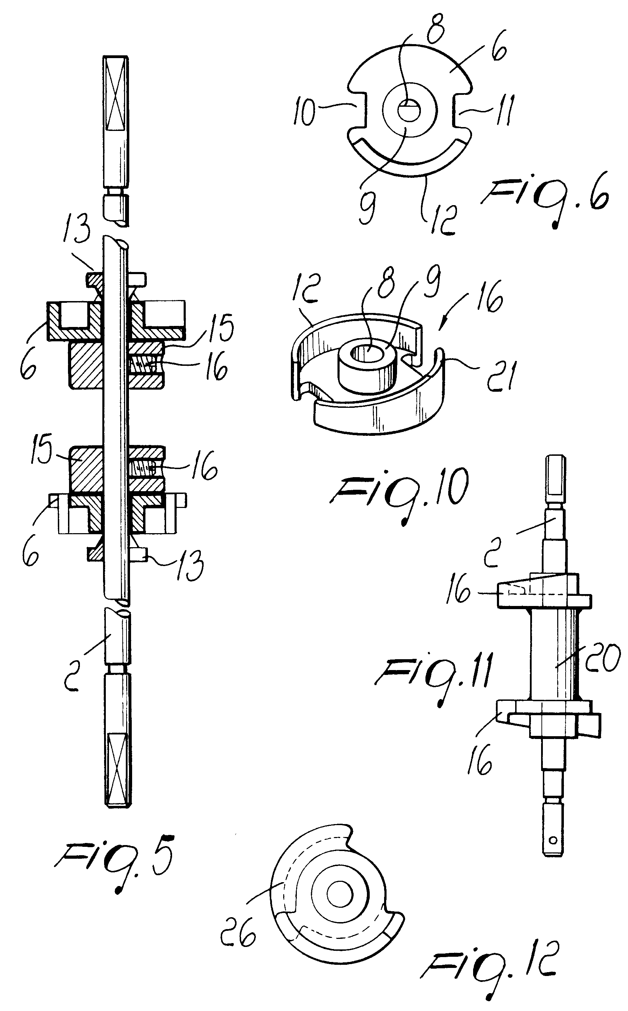

The above-described embodiment is a first embodiment for the fixing of the disk 6 to the spindle 2 and is shown in Figures 5 and 7-9.

A second embodiment is instead shown in Figure 11, which also illustrates a second embodiment of the ferrite disk, now designated by the reference numeral 16.

The second manner of locking the ferrite disk provides for the use of a sleeve 20 which is arranged around the spindle 2 between the couple of ferrite disks and is glued thereto.

The second embodiment of the ferrite disk, designated by the reference numeral 16, provides for a disk which is similar to the above-described disk 6 but has a second raised rim 21 which is arranged opposite the raised rim 12 and has a chamfered region.

As will become apparent hereinafter in the description of the operation of the device, the chamfered region allows to improve the accuracy of the position measurement made by the device according to the invention.

The two ferrite disks 6 or 16, depending on the selected embodiment, are respectively rotated through approximately 30° with respect to each other, in relation to the rotation axis constituted by the spindle 2: this different arrangement of the two ferrite disks can be provided with angular values other than the one indicated above.

Figure 12 is instead a view of a third embodiment of the ferrite disk, now designated by the reference numeral 26.

Finally, Figures 13 and 14 are views of a fourth embodiment of the ferrite disk, now designated by the reference numeral 36. In this fourth embodiment, the raised rims of the disk are both chamfered.

Going back to the description of the inductive pickup, the ferrite core 1, rigidly coupled to the casing 5 of the device, is fixed to an aluminum base 22, for example by gluing. A printed circuit for welding rheophores 23 is also arranged on the aluminum base 22.

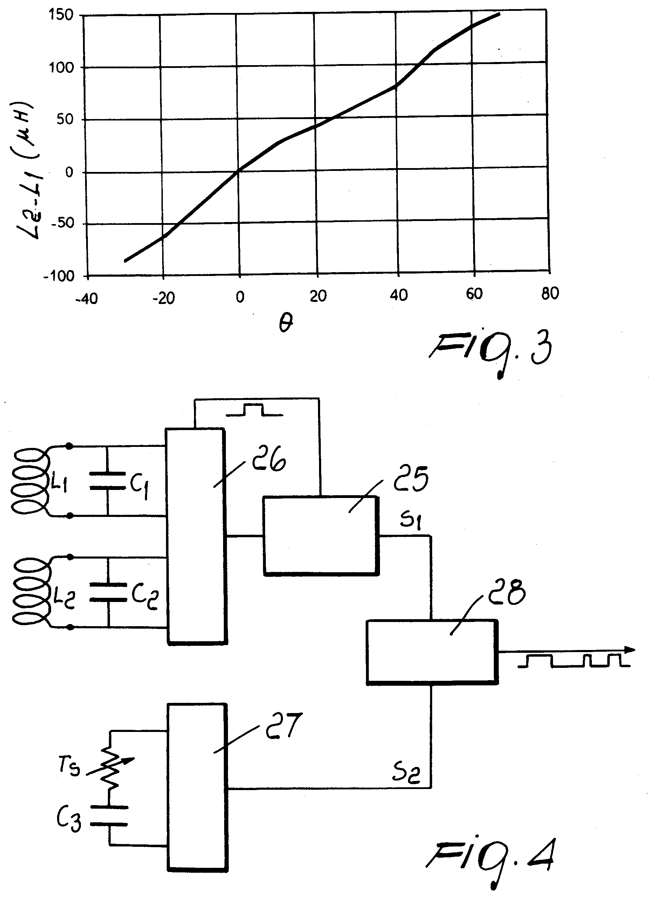

In order to detect the angular measure that indicates the position of the stem of an adjustment valve, electronic excitation and detection means, shown in Figure 4, are provided and arranged so that they are rigidly coupled to the sensor and are an integral part thereof.

The electronic excitation and detection means comprise an oscillator of the relaxation type, in which a pulse generator and counter circuit sends a short pulse alternatively to a first network L₁C₁ constituted by one of the inductors that constitute the pickup and by a fixed capacitor, and to a second network L₂C₂ which is constituted by the other inductor of the pickup and by another fixed capacitor.

The short pulse is sent by means of multiplexer means 26.

The electronic means are completed by a monostable device 27 which has a temperature compensation function with a corresponding network constituted by a capacitor C₃ and a variable resistor Tₛ. A combiner network 28 supplies in output the required measure signal.

With reference to the above figures, the operation of the device according to the invention is as follows, taking as an example the relative measurement of the angles of a stem of an adjustment valve.

Briefly, the movement of the valve stem coupled to the spindle 2 is converted into the rotation of the spindle, the position whereof is detected by the double inductive pickup, which produces a relative measurement of the rotation angle of the spindle, obtained by means of the difference between the measurements of each individual pickup. The value of the two inductors that constitute the pickup is in fact converted, by virtue of the electronic means, into two duration signals T1 and T2, whose difference constitutes the required position measure.

In detail, the movement of the stem of the valve, converted into a rotation by means of the system for coupling to the spindle 2, produces a rotation of the spindle whereto the movable parts 6 (or 16 or 26) of the double pickup 3 are connected.

The magnetic circuit closes gradually as the rotation of the spindle 2 continues and produces a different concatenation of the magnetic flux according to the position of the movable parts 6 with respect to the fixed parts 4.

Accordingly, the magnetic circuit varies its inductive value from a minimum, when the disk 6 lies inside the area of the fixed part 4 only to a minimal extent, to the maximum value, which is obtained when the disk 6 is fully immersed in the magnetic circuit.

The graph of Figure 2 plots the variation in inductance as a function of the rotation angle of the spindle 2 and therefore of the disk 6 rigidly coupled thereto, as a consequence of a movement of the valve stem whose position is to be determined.

The graph clearly shows that by using the movable part 6 shaped according to the first embodiment shown in Figure 6, the variation in inductance has an acceptable value only between 40 and 80 degrees. In the remaining part of the measurement range, variation as a function of the angle is insufficient. As shown in the graph, the greatest signal variations in fact occur when the movable disk 6 is located at the central part of the fixed part 4 (in this case, between 40 and 80 degrees a linear variation is present).

Variations in the inductive value, even if to a lesser extent, also occur when the movable disk 6 is located at the two long wings of the fixed part 4.

Accordingly, in order to achieve a more gradual inductance variation over the entire rotary stroke of the movable disk 6, the second embodiment of the disk 6, which has a chamfered rim, is used.

In this way, the inductive output signal, which constitutes the measure, has a linear behavior.

The graph of Figure 3 plots the difference signal, which is obtained by subtracting the two inductive signals obtained, as a function of the rotation angle of the spindle 2 and therefore of the movable parts 6 rigidly fixed thereto.

As previously mentioned, the two inductors L₁ and L₂ that constitute the pickup are inserted in an oscillator circuit of the relaxation type, which applies the above cited pulse to the networks L₁C₁ and L₂C₂: this pulse causes, for each network, free damped oscillations whose period T depends on the value of the corresponding inductance at that instant.

The counter circuit 25 then counts a fixed number N of said oscillations, generating two duration signals T1 and T2 which are proportional to the acquired inductance value, whose difference is given by the signal S1.

Switching between the networks L₁C₁ and L₂C₂ occurs every N oscillations.

The difference signal S1 obtained by subtracting the two signals (whose duration is respectively T1 and T2) from each other constitutes the measure of the position of the stem of the valve. In turn, the signal S1 is corrected by temperature compensation with the signal S2.

In practice it has been observed that the device according to the invention fully achieves the intended aim, since it allows to provide a relative measurement of angles by means of a differential system, minimizing all mechanical effects and displacements not caused by angular movement.

The electronic circuit used further allows to obtain two duration signals which depend on the detected rotation angle of the spindle, minimizing energy consumption.

The use of movable parts executed according to the above-described second embodiment allows to obtain a linear variation of the inductances as a function of the rotation angle of the spindle over the entire rotation range of said spindle.

The electronic circuit used is also compatible with the electronics used for pickups for pressure sensors, thus allowing to provide advantageous economies of scale.

The device thus conceived is susceptible of numerous modifications and variations, all of which are within the scope of the inventive concept; all the details may also be replaced with other technically equivalent elements.

In practice, the materials employed, so long as they are compatible with the specific use, as well as the dimensions, may be any according to requirements and to the state of the art.

## Claims

1. Device for the relative measurement of angles, particularly for stems of adjustment valves and for rotary valves, characterized in that it comprises a spindle which is meant to be coupled to a stem of an adjustment valve and is provided with two inductive pickups, which are adapted to generate a relative measure of the rotation angle of said spindle by means of a differential system, following a movement of the stem of said valve, and electronic excitation and detection means which are adapted to convert said measure into a pair of electrical signals, the duration difference whereof constitutes a measure of the movement of the stem of said adjustment valve.

2. Device according to claim 1, characterized in that each one of said two inductive pickups comprises a fixed part, which is rigidly coupled to a casing for containing said device, and a movable part, which is rigidly coupled to said spindle.

3. Device according to claim 2, characterized in that said fixed part is constituted by a ferrite core whereon a copper winding forming an excitation coil is provided.

4. Device according to claim 2, characterized in that said fixed part has a substantially E-shaped or U-shaped transverse cross-section in which the parallel wings of the E or U are chamfered to accommodate the rotation of said movable part.

5. Device according to claim 2, characterized in that said movable part is constituted by a disk which has two diametrically opposite recesses and is adapted to be fitted, by means of a central hole, around said spindle, and has a first raised rim arranged circumferentially around a portion of said disk, the disks of said two inductive pickups being arranged so that they are rigidly coupled to said spindle and are angularly rotated with respect to each other, said recesses forming, during rotation, a variable cross-section of said disks in order to generate a reluctance variation.

6. Device according to claim 5, characterized in that said disk has a second chamfered raised rim which is arranged diametrically opposite with respect to said first raised rim.

7. Device according to claim 5, characterized in that the first raised rim of said disk is chamfered like said second raised rim.

8. Device according to claim 5, characterized in that each one of said disks is rigidly locked to said spindle in an upward region by means of a wedge-shaped plug and in a downward region by means of a disk-like element which is provided with a locking grub screw.

9. Device according to claim 5, characterized in that each one of said disks is locked so as to be rigidly coupled to said spindle by means of a sleeve which is arranged around said spindle, between said disks, and is glued thereto.

10. Device according to one or more of the previous claims, characterized in that said casing is constituted by two halves which enclose said spindle between them, the fixed parts of said two inductive pickups being arranged on a plate which is rigidly coupled to said casing.

11. Device according to one or more of the previous claims, characterized in that said electronic excitation and detection means are rigidly coupled to said containment casing.

12. Device according to one or more of the previous claims, characterized in that said electronic excitation and detection means comprise a pulse generator circuit for applying pulses to networks constituted by the respective inductors of said two inductive pickup and by fixed capacitors, and a counter circuit for counting the oscillations induced in said networks which depend on the instantaneous value of said inductors said value depending in turn on the position of said movable parts with respect to said fixed parts of the two inductive pickups, said counter circuit generating two signals the durations whereof are proportional to said detected inductance value.

13. Device according to one or more of the previous claims, characterized in that said electronic excitation and detection means also comprise a combiner network in order to generate the difference between the signals generated by said counter circuit.

14. Method for detecting an angular position, particularly for determining the position of a stem of an adjustment valve and of a rotary valve, characterized in that it comprises the steps of:
-- converting into a rotation a movement of an element the position whereof is to be determined;
-- detecting said rotation by means of a double inductive transducer which is adapted to produce a relative measure of said rotation by means of a differential system;
-- converting said measure into two signals the duration whereof is proportional to said detected rotation; and
-- generating a difference between said two signals in order to obtain the intended position measure.

15. Method according to claim 14, characterized in that said measure is obtained by means of a variation in the reluctance of a magnetic circuit which comprises said double inductive transducer.

16. Device according to one or more of the previous claims characterized in that it comprises one or more of the characteristics described and/or illustrated.
